# EUROPÄISCHE PATENTSCHRIFT

(11) **EP 1 172 954 B1**
(45) Veröffentlichungstag und Bekanntmachung des Hinweises auf die Patenterteilung: **14.09.2005**
(21) Anmeldenummer: 01440064.2
(22) Anmeldetag: 12.03.2001
(51) Int. Cl.: H04J 3/06

(54) **Verfahren, Module und Programm-Module zur Synchronisierung**
Method, module and module program for synchronisation
Procédé, module et programme pour synchronisation

(30) Priorität: 20.03.2000 DE 10013313
(43) Veröffentlichungstag der Anmeldung: 16.01.2002
(73) Patentinhaber: ALCATEL, 75008 Paris (FR)
(72) Erfinder: Dive, Geoffrey, Annapolis, MD 21401 (US)
(74) Vertreter: Urlichs, Stefan

(56) Entgegenhaltungen:
- EP-A- 0 722 233

## Beschreibung

Die vorliegende Erfindung betrifft ein Verfahren zur Synchronisierung von einem ersten und zumindest einem zweiten Modul mit jeweils einem Taktgeber nach dem Oberbegriff des Anspruches 1, sowie ein (erstes) Modul nach dem Oberbegriff des Anspruches 7, ein (zweites) Modul nach dem Oberbegriff des Anspruches 8, ein Master-Programm-Modul nach dem Oberbegriff des Anspruches 9, ein Slave-Programm-Modul nach dem Oberbegriff des Anspruches 10 und eine Vorrichtung nach dem Oberbegriff des Anspruches 11 hierfür.

Auf den Gebieten der Telekommunikation und der Computertechnik können die betriebsnotwendigen Baugruppen eines Gerätes häufig nicht auf einer Elektronik-Platine angeordnet werden, sondern müssen auf mehrere separate Module mit jeweils einer oder mehreren Platinen verteilt werden. Gerade bei Telekommunikationssystemen werden aus Gründen der Ausfallsicherheit auch redundante Module eingesetzt. Damit die Module synchron arbeiten, werden die Module mit einem zentralen, auch als "Clock-Signal" bezeichneten Taktsignal versorgt. Ein solches zentrales Taktsignal wird dann von einem zentralen Taktgeber erzeugt und an die Module übertragen. Zur Übertragung ist beispielsweise ein Clock-Kanal eines Busses vorgesehen, an den die Module angeschlossen sind. Die Module arbeiten dann entweder unmittelbar mit dem von dem Bus abgegriffenen Taktsignal oder synchronisieren einen eigenen, auf dem jeweiligen Modul vorhandenen lokalen Taktgeber auf das zentrale Taktsignal. Die lokalen Taktgeber erzeugen dann jeweils in Relation zu dem zentralen Taktsignal geringfügig phasenverschobene lokale Taktsignale, die durch die Laufzeit des zentralen Taktsignals auf dem Bus bedingt ist.

Bei hochpräzisen und mit hoher Taktfrequenz arbeitenden Geräten, beispielsweise bei sogenannten Cross-Connects in der SDH-Übertragungstechnik (SDH = Synchronous Digital Hierarchy), hat diese Phasenverschiebung bereits störenden Einfluss auf die Präzision des Gerätes. Die Module eines Gerätes arbeiten dann nicht mehr ausreichend synchron und es kommt z.B. zu Datenüberholungen bei Nachrichten, die die Module untereinander über den oben erwähnten Bus austauschen.

Auch wenn Software-Module unter Echtzeitbedingungen zusammenwirken sollen, die jeweils von separaten Betriebssystemen mit je einem lokalen Taktgeber verwaltet werden, kann bei Verteilung eines zentralen Taktsignals an die jeweiligen Betriebssysteme durch die Laufzeit des zentralen Taktsignals eine störende Asynchronität auftreten.

US 5,249,206 beschreibt ein Synchronisationsverfahren zum gegenseitigen Abgleich zweier Taktmodule, bei dem jedes Taktmodul seine Taktfrequenz an das jeweils andere Taktmodul sendet. In jedem Taktmodul wird kontinuierlich eine Phasendifferenz bestimmt und dem jeweils anderen Taktmodul mitgeteilt. Beide Taktmodule gleichen ihre Oszillatoren auf einen Mittelwert aus den Phasendifferenzen ab. Dabei kommt es entscheidend darauf an, dass beide Taktmodule ihre Phasendifferenzwerte zeitgleich bestimmen. Dazu senden sich die beiden Taktmodule gegenseitig TIME SYNC Signale. Da der Abgleich auf einen Mittelwert der Phasendifferenzen erfolgt, wird nur eine asymptotische Annäherung der Taktfrequenzen der beiden Taktmodule an einander erreicht.

Es ist daher Aufgabe der Erfindung, Module, die jeweils einen lokalen Taktgeber aufweisen, mit hoher Präzision zu synchronisieren.

Diese Aufgabe wird durch ein Verfahren gemäss der technischen Lehre des Anspruchs 1, sowie ein Modul gemäß der technischen Lehre des Anspruchs 7, ein Modul gemäß der technischen Lehre des Anspruchs 8, ein Master-Programm-Modul gemäß der technischen Lehre des Anspruchs 9, ein Slave-Programm-Modul gemäß der technischen Lehre des Anspruchs 10 und eine Vorrrichtung gemäß der technischen Lehre des Anspruchs 11 gelöst. Weitere vorteilhafte Ausgestaltungen der Erfindung sind den abhängigen Ansprüchen und der Beschreibung zu entnehmen.

Der Erfindung liegt dabei der Gedanke zugrunde, dass ein erstes, vereinfachend Master-Modul genanntes Modul, ein von seinem Taktgeber erzeugtes "Master-Taktsignal" an ein im Folgenden vereinfachend Slave-Modul genanntes Modul sowie eventuell vorhandene weitere Slave-Module überträgt. Die Slave-Module synchronisieren dann ihre jeweiligen Taktgeber auf das Master-Taktsignal und übertragen von den nunmehr synchronisierten Taktgebern erzeugte "Slave-Taktsignale" an das Master-Modul. Das Master-Modul bekommt somit eine Rückkopplung auf seine Synchronisierung. Das Master-Modul ermittelt dann jeweils einen Zeitdifferenzwert zwischen dem Master-Taktsignal und dem jeweiligen Slave-Taktsignal. Diese Zeitdifferenz wird im Wesentlichen durch die für die Übertragung des Master-Taktsignals zu dem jeweiligen Slave-Modul benötigte Signallaufzeit sowie durch die für die Übertragung des jeweiligen Slave-Taktsignals von dem jeweiligen Slave-Modul zu dem Master-Modul benötigte

Signallaufzeit hervorgerufen. Üblicherweise sind beide Signallaufzeiten aufgrund symmetrischer Übertragungswege zwischen Master-Modul und Slave-Modul jeweils gleich lang, so dass der jeweilige Zeitdifferenzwert in etwa die doppelte Signallaufzeit repräsentiert. Das Master-Modul versendet dann Informationen über die jeweiligen Zeitdifferenzwerte an das oder die Slave-Module, die anhand dieser Informationen ihre Taktgeber justieren. Die durch die jeweilige Signallaufzeit des Master-Taktsignales zu den Slave-Modulen bedingten Phasendifferenzen zwischen Master-Taktsignal und den Slave-Taktsignalen werden somit auf ein nicht mehr störendes Maß reduziert, bei optimalen Verhältnissen sogar vollständig beseitigt, so dass das Master-Modul und die Slave-Module optimal aufeinander synchronisiert sind.

Weitere vorteilhafte Ausgestaltungen der Erfindung ergeben sich aus den abhängigen Ansprüchen.

In einer bevorzugten Ausführungsform der Erfindung halbieren entweder das Master-Modul oder die Slave-Module den jeweiligen Zeitdifferenzwert zur Ermittlung der Signallaufzeit und damit der jeweils zu korrigierenden Phasendifferenz zwischen Master-Taktsignal und Slave-Taktsignal. Handelt es sich nicht um gleich lange Signallaufzeiten zwischen Master-Modul und Slave-Modul, beispielsweise aufgrund unterschiedlicher Übertragungswege, können kompliziertere Algorithmen zur Ermittlung der jeweils zu korrigierenden Phasendifferenz eingesetzt werden.

Das Master-Modul kann das Master-Taktsignal kontinuierlich oder auch nur zu vorbestimmten Zeitpunkten an die Slave-Module übertragen, z.B. zyklisch wiederkehrend, nur einmalig, beispielsweise im Zusammenhang mit einer Start-Synchronisierungsprozedur, oder in unregelmäßigen Abständen, beispielsweise in Zeiten geringer Belastung des Master-Moduls und/oder der Slave-Module.

In einer weiteren Variante der Erfindung übertragen die Slave-Module ihre jeweiligen Slave-Taktsignale immer wieder an das Master-Modul, so dass dieses Zeitdifferenzwerte zwischen dem Master-Taktsignal und dem jeweiligen Slave-Taktsignal ermitteln und so den synchronen Betrieb der Slave-Module mit dem Master-Modul überwachen kann. Ist ein Slave-Taktsignal eines Slave-Moduls asynchron mit dem Master-Taktsignal, kann das Master-Modul erneut einen Korrekturwert an das jeweilige Slave-Modul zur Justierung von dessen jeweiligem Taktgeber senden.

Zweckmäßigerweise überträgt auch das Master-Modul das Master-Taktsignal immer wieder erneut an die Slave-Module, so dass diese in einer Variante der Erfindung Zeitdifferenzwerte zwischen ihrem jeweiligen Slave-Taktsignal und dem Master-Taktsignal ermitteln können. Daraus ergeben sich dann verschiedene Möglichkeiten:

Die Slave-Module übertragen die jeweiligen Zeitdifferenzwerte an das Master-Modul, damit dieses den Erfolg einer Synchronisierungsprozedur überwachen kann oder eventuell während des Betriebs auftretende Abweichungen zwischen Master-Taktsignal und den jeweiligen Slave-Taktsignalen ermitteln kann. Das Master-Modul kann dann gegebenenfalls wieder die oben beschriebene Synchronisierungsprozedur zur Synchronisierung der Slave-Taktsignale starten.

Die Slave-Module können anhand der von ihnen ermittelten Zeitdifferenzwerte jedoch auch aus eigener Initiative ihre jeweiligen Taktgeber justieren.

Im Folgenden wird die Erfindung anhand von Ausführungsbeispielen unter Zuhilfenahme der Figuren dargestellt. Es zeigen
- Figur 1: einen Ablauf einer erfindungsgemäßen Synchronisierung anhand schematisch dargestellter erfindungsgemäßer Module MOD1 und MOD2,
- Figur 2: eine Überwachung der Synchronisierung sowie eine Nachsynchronisierung im Anschluss an die Synchronisierung aus Figur 1,
- Figur 3: eine ergänzende oder alternative Lösung zu Figur 2, also eine Überwachung der Synchronisierung sowie eine Nachsynchronisierung ebenfalls im Anschluss an die Synchronisierung aus Figur 1,
- Figur 4: eine Anordnung zur Ausführung des erfindungsgemäßen Verfahrens.

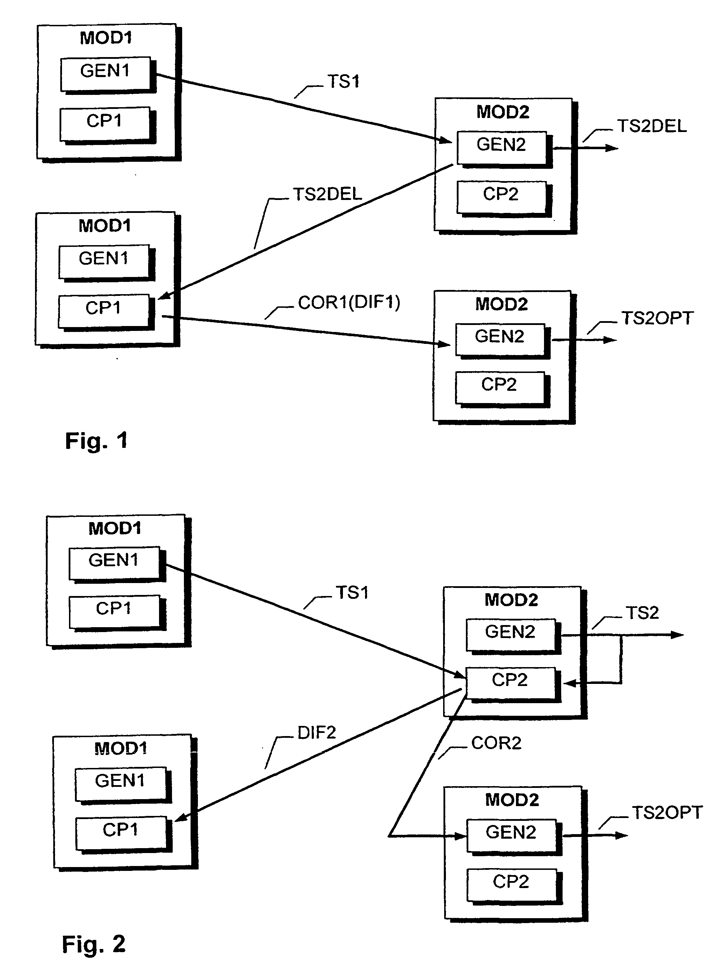

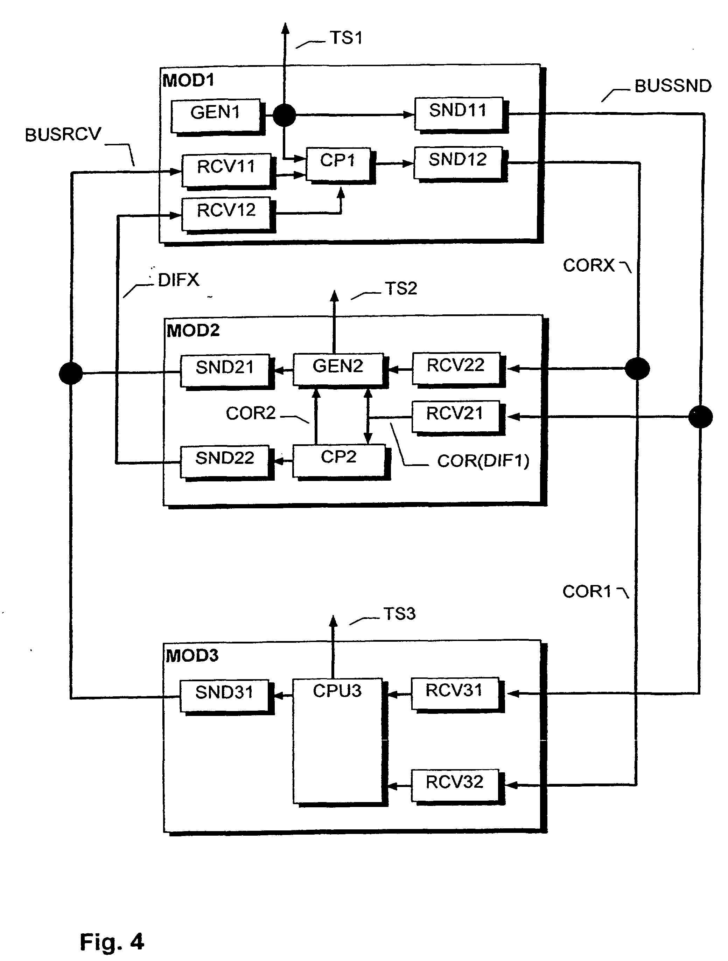

Figur 1 zeigt einen Ablauf einer erfindungsgemäßen Synchronisierung anhand schematisch dargestellter erfindungsgemäßer Module MOD1 und MOD2. Zur Verdeutlichung des Ablaufs der Synchronisierung sind die Module MOD1 und MOD2 jeweils zweifach dargestellt. Die Module MOD1 und MOD2 sind beispielsweise Elektronik-Platinen eines Computersystems oder eines Telekommunikationsknotens, beispielsweise eines SDH Cross-Connects (SDH = Synchronous Digital Hierarchy). Die Module MOD1 und MOD2 sind über einen nicht dargestellten Bus miteinander verbunden, auf dem die Module MOD1 und MOD2 einander Informationen senden können. Die dazu erforderlichen Sende- und Empfangsmodule sind in Figur 4 näher erläutert. Die Module MOD1 und MOD2 können auch Software-Module sein, die beispielsweise jeweils ein lokales Betriebssystem synchronisieren.

Von dem Modul MOD1 sind ein Taktgeber GEN1 und eine Logikkomponente CP1 gezeigt und von dem Modul MOD2 ein Taktgeber GEN2 und eine Logikkomponente CP2. Die Taktgeber GEN1 und GEN2 enthalten jeweils z.B. einen Quarz-Oszillator zur Erzeugung eines Takt-Grundsignals und eine nachgeschaltete Elektronik, beispielsweise mit einem rücksetzbaren Zähler, zur Erzeugung eines Ausgangs-Taktsignals aus dem Takt-Grundsignal. Derartige Schaltungen sind an sich bekannt. Der Taktgeber GEN1 erzeugt auf diese Weise ein Taktsignal TS1, der Taktgeber GEN2 ein Taktsignal TS2. Die Logikkomponenten CP1 und CP2 umfassen jeweils einen Vergleicherbaustein zur Ermittlung einer Phasendifferenz zwischen zwei Taktsignalen sowie einen Generierungsbaustein zur Bildung eines Korrekturwertes, mit dem der Taktgeber GEN2 justierbar ist. Die Logikkomponenten CP1 und CP2 können z.B. Signalprozessoren oder integrierte Schaltkreise sein. Die Module MOD1 und MOD2 können auch weitere Funktionsbaugruppen, beispielsweise Sender und/oder Empfängerbausteine für das Senden und Empfangen von Nutzdatentelegrammen, z.B. von SDH-Containern, aufweisen. Ferner können die Module MOD1 und MOD2 und deren funktionale Komponenten insgesamt durch einen Prozessor realisiert sein, der einen integrierten Taktgeber aufweist und Programmcode erfindungsgemäßer Programm-Module ausführt.

Zu Beginn der Synchronisierung überträgt das Modul MOD1 das von seinem Taktgeber GEN1 erzeugte Taktsignal TS1 an das Modul MOD2. Dieses synchronisiert seinen Taktgeber GEN2 auf das Taktsignal TS1. Weil jedoch für die Übertragung des Taktsignals TS1 von dem Modul MOD1 an das Modul MOD2 eine gewisse Übertragungszeit erforderlich ist und zudem auch der Synchronisierungsvorgang des Taktgebers GEN2 eine gewisse Bearbeitungszeit benötigt, weist das nunmehr von dem Taktgeber GEN2 erzeugte Taktsignal TS2DEL eine Phasendifferenz zu dem Taktsignal TS1 auf.

Das Modul MOD2 überträgt das Taktsignal TS2DEL an das Modul MOD1. Dafür wird ebenfalls Übertragungszeit benötigt. Das Modul MOD1 ermittelt einen Zeitdifferenzwert DIF1 zwischen dem Taktsignal TS1 und dem von ihm empfangenen Taktsignal TS2DEL. Der Zeitdifferenzwert DIF1 ist im Wesentlichen durch die Übertragungszeit des Taktsignals TS1 von dem Modul MOD1 an das Modul MOD2 und die Übertragungszeit des Taktsignals TS2DEL von dem Modul MOD2 an das Modul MOD1 bedingt. Da die Übertragungswege zwischen den Modulen MOD1 und MOD2 im vorliegenden Fall gleich lang sind, halbiert die Logikkomponente CP1 den Zeitdifferenzwert DIF1 und bildet eine Korrekturinformation COR(DIF1). Anschließend überträgt das Modul MOD1 die Korrekturinformation COR(DIF1) an das Modul MOD2, welches seinen Taktgeber GEN2 mit der Korrekturinformation COR(DIF1) justiert. Der Taktgeber GEN2 erzeugt dann ein Taktsignal TS2OPT, das synchron mit dem Taktsignal TS1 ist. Wenn die Übertragungswege zwischen den Modulen MOD1 und MOD2 nicht gleich lang sind, kann die Logikkomponente CP1 auch andere, aufwendigere Algorithmen zur Bildung des Korrekturwertes COR1 einsetzen.

Die Korrekturinformation COR(DIF1) kann beispielsweise einen digital codiert übertragenen Startwert für einen in dem Taktgeber GEN2 enthaltenen rücksetzbaren Zähler enthalten. Es ist auch möglich, dass das Modul MOD1 das Taktsignal TS1 um den halbierten Zeitdifferenzwert DIF1 zwischen dem Taktsignal TS1 und dem Taktsignal TS2DEL in der Phase zeitlich nach vorne korrigiert und das solchermaßen "vorauseilende" Taktsignal TS1 als Korrekturinformation COR(DIF1) an das Modul MOD2 überträgt.

Ferner kann das Modul MOD1 den Zeitdifferenzwert DIF1 zwischen dem Taktsignal TS1 und dem Taktsignal TS2DEL auch unbearbeitet, also ohne das oben beschriebene Halbieren an das Modul MOD2 als Korrekturinformation COR(DIF1) versenden. Dann halbiert das Modul MOD2 den Zeitdifferenzwert DIF1 und justiert so seinen Taktgeber GEN2. Weiter kann das Modul MOD2 z.B. auch einen Offset-Wert in die Korrekturinformation COR(DIF1) einarbeiten. Ein solcher Offset-Wert kann beispielsweise die Zeit repräsentieren, die der Taktgeber GEN2 für den Justiervorgang benötigt oder die das Modul MOD2 zum Empfangen und Einlesen des Korrekturwertes COR1 braucht.

Dem in Figur 2 dargestellten Ablauf sei die anhand von in Figur 1 dargestellte Synchronisierung vorausgegangen. Die Taktgeber GEN1 und GEN2 erzeugen Taktsignale TS1 beziehungsweise TS2, die unter optimalen Vorraussetzungen synchron sind, z.B. bei exakt gleich arbeitenden, störungsfreien Taktgebern GEN1 und GEN2. Das Modul MOD1 überträgt das Taktsignal TS1 an die Logikkomponente CP2 des Moduls MOD2. Ferner erhält die Logikkomponente CP2 das Taktsignal TS2 von dem Taktgeber GEN2. Die Logikkomponente CP2 bildet aus dem durch die Übertragung von dem Modul MOD1 her verzögerten Taktsignal TS1 und dem lokalen Taktsignal TS2 einen Zeitdifferenzwert DIF2, der bei synchronen Taktsignalen TS1 und TS2 gleich dem halben Zeitdifferenzwert DIF1 ist.

Das Modul MOD2 überträgt den Zeitdifferenzwert DIF2 an das Modul MOD1, so dass dieses erkennen kann, ob das Taktsignal TS2 synchron mit dem Taktsignal TS2 ist. Wenn dies nicht der Fall ist, kann das Modul MOD1 wieder den anhand von Figur 1 dargestellten Synchronisierungsvorgang initialisieren und/oder die Störung an eine den Modulen MOD1 und MOD2 übergeordnete Steuerung melden.

Im vorliegenden Fall bildet die Logikkomponente CP2 einen Korrekturwert COR2 aus dem Zeitdifferenzwert DIF2 und dem zuvor empfangenen und von ihr gespeicherten Zeitdifferenzwert DIF1. Dabei subtrahiert die Logikkomponente CP2 beispielsweise von dem Zeitdifferenzwert DIF2 den halben Zeitdifferenzwert DIF1. Die Logikkomponente CP2 kann bei der Bildung des Korrekturwertes COR2 auch weitere Korrekturfaktoren berücksichtigen, z.B. eine Zeit, die zum Justieren des Taktgebers GEN2 benötigt wird. Die Logikkomponente CP2 gibt den Korrekturwert COR2 an den Taktgeber GEN2, der sich dann wieder justiert und somit ein Taktsignal TS2OPT erzeugt, das synchron mit dem Taktsignal TS1 ist.

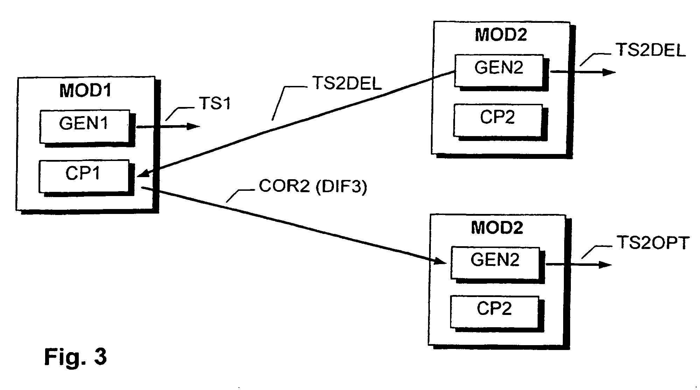

Auch dem in Figur 3 dargestellten Ablauf sei die anhand von in Figur 1 dargestellte Synchronisierung vorausgegangen. Jedoch ist in Figur 3 das von dem Taktgeber GEN2 erzeugte Taktsignal TS2DEL nicht mehr exakt synchron mit dem Taktsignal TS1, da z.B. das Modul MOD2 kurzzeitige keinen Stromversorgung hatte. Das Modul MOD2 überträgt das Taktsignal TS2DEL an das Modul MOD1. Das Taktsignal TS2DEL kommt mit einer durch die Übertragung bedingten zeitlichen Verschiebung an. Diese entspricht bei symmetrischen Übertragungswegen, wie anhand von Figur 1 erläutert, dem halben Zeitdifferenzwert DIF1. Das Modul MOD1 korrigiert daher zunächst das empfangene Taktsignal TS2DEL um den halben Zeitdifferenzwert DIF1. Ferner ermittelt das Modul MOD1 einen Zeitdifferenzwert DIF3 zwischen dem korrigierten Taktsignal TS2DEL und dem Taktsignal TS1. Dann sendet das Modul MOD1 eine Korrekturinformation COR2(DIF3) auf der Basis des Zeitdifferenzwertes DIF3 an das Modul MOD2, so dass dieses seinen Taktgeber GEN2 justieren kann. Der Taktgeber GEN2 erzeugt daraufhin wieder ein mit dem Taktsignal TS1 synchrones Taktsignal TS2OPT.

Wie anhand der Figuren 2 und 3 gezeigt, kann das Modul MOD2 auch im laufenden Betrieb immer wieder neu synchronisiert werden, so dass eventuell sich während des Betriebs einschleichende Phasenabweichungen zwischen den Taktsignalen TS1 und TS2 wieder beseitigt werden.

Neben dem Modul MOD2 können auch weitere, nicht dargestellte Module von dem Modul MOD1 auf die erläuterte Weise synchronisiert werden. Ferner ist es möglich, dass auch das Modul MOD2 ein von ihm abhängendes Modul synchronisiert, da das Modul MOD2, wie erläutert, sehr genau mit dem Modul MOD1 synchronisiert ist. Es können also nicht nur "Parallelschaltungen" mit einem synchronisierenden Modul und mehreren durch dieses synchronisierten Modulen gebildet werden, sondern auch kaskadierte Anordnungen.

Figur 4 zeigt die aus Figur 1 bekannten Module MOD1 und MOD2 sowie ein weiteres Modul MOD3, bei dem ein Steuermodul CPU3, z.B. ein Signalprozessor, die Funktionen eines Taktgebers (GEN1 oder GEN2) und die Funktionen der den Taktgeber ansteuernden Logikkomponente (CP1, CP2) erfüllt. Dazu führt das Steuermodul CPU3 Programmcode eines erfindungsgemäß ausgestalteten Slave-Programm-Moduls aus.

Das Modul MOD1 versendet sein Taktsignal TS1 über ein Sendemodul SND11 auf einer Busleitung BUSSND. Von dieser empfangen das Modul MOD2 das Taktsignal TS1 mit Hilfe eines Empfangsmoduls RCV21 und das Modul MOD3 mit Hilfe eines Empfangsmoduls RCV31. Dann synchronisiert das Modul MOD2 seinen Taktgeber GEN2 auf das Taktsignal TS1. Auch das Modul MOD3 synchronisiert auf das Taktsignal TS1 und erzeugt ein Taktsignal TS3. Allerdings sind die Taktsignale TS2 und TS3 phasenverschoben um die jeweiligen Zeitspannen, die das Taktsignal TS1 zur Übertragung auf der Busleitung BUSSND zu den Modulen MOD2 und MOD3 benötigt.

Das Modul MOD2 sendet das Taktsignal TS2 mit Hilfe eines Sendemoduls SND21 auf einer Busleitung BUSRCV an das Modul MOD1, welches das Taktsignal TS2 mit Hilfe eines Empfangsmoduls RCV11 empfängt. Die Logikkomponente CP1 bildet in aus Figur 1 bekannter Weise die Korrekturinformation COR(DIF1) und versendet diese mit Hilfe eines Sendemoduls SND12 auf einer Busleitung CORX an das Modul MOD2. Dieses empfängt die Korrekturinformation COR(DIF1) mit Hilfe eines Empfangsmoduls RCV22 und justiert seinen Taktgeber GEN2.

Das Modul MOD3 sendet das Taktsignal TS3 mit Hilfe eines Sendemoduls SND31 auf der Busleitung BUSRCV an das Modul MOD1. Die Logikkomponente CP1 bildet analog wie für das Modul MOD2 eine Korrekturinformation und versendet diese über das Sendemodul SND12 an das Modul MOD3. Dieses empfängt die Korrekturinformation mit Hilfe eines Empfangsmoduls RCV32 und justiert die Taktgeber-Funktion seines Steuermoduls CPU3.

Das Empfangsmodul RCV22 des Moduls MOD2 gibt die Korrekturinformation COR(DIF1) auch an die Logikkomponente CP2 weiter, so dass diese, wie anhand von Figur 2 erläutert, einerseits den Korrekturwert COR2 für den Taktgeber GEN2 zu dessen Justierung erzeugen kann und andererseits den Zeitdifferenzwert DIF2, den ein Sendemodul SND22 auf einer Busleitung DIFX an das Modul MOD1 sendet.

Die Module in Figur 4 sind zur Veranschaulichung verschiedener Ausführungsvarianten verschiedenartig ausgestaltet, so dass sich deren Funktionsweise als synchronisierendes "Master"-Modul (MOD1) sowie als zu synchronisierende "Slave"-Module (MOD2 und MOD3) schon aufgrund der jeweiligen Modul-Bauart sowie der jeweiligen Anschlussart der Sende- und Empfangsmodule ergibt.

Es ist jedoch auch möglich, dass gleichartige Module eingesetzt werden, die sowohl eine "Slave"-Funktion als auch eine "Master"-Funktion ausüben können. Beispielsweise kann auf dem Modul MOD3 nicht nur ein Slave-Programm-Modul, wie erläutert, sondern auch ein Master-Programm-Modul vorhanden sein, so dass das Modul MOD3 auch als Synchronisierungs-"Master" agieren kann.

Ferner kann auch das Modul MOD1 wie das Modul MOD3 aufgebaut sein und einen Prozessor zur Ausführung von Programmcode aufweisen, jedoch im Unterschied zu Modul MOD3 ein Master-Programm-Modul enthalten, das die oben erläuterten Synchronisierungsfunktion sowie bei Bedarf auch eine Überwachungsfunktion für die Synchronisierung ausführen kann.

Eine Berechtigung als "Master-Modul" zu arbeiten, also eine Berechtigung zur Synchronisierung eines oder mehrerer Slave-Module, kann dauerhaft festgelegt sein, indem z.B. ein Abfragekontakt, ein sogenannter Jumper, auf dem jeweiligen Modul in geeigneter Weise konfiguriert wird. Anhand der Konfiguration des Jumpers kann das jeweilige Modul ermitteln, ob es als Master-Modul oder als Slave-Modul eingesetzt wird. Es kann jedoch auch vorgesehen sein, dass die jeweilige Funktion dynamisch ermittelt wird, indem beispielsweise dasjenige Modul zum Master-Modul wird, das als erstes Modul sein Taktsignal versendet.

## Patentansprüche

1. Verfahren zur Synchronisierung von einem ersten und zumindest einem zweiten Modul (MOD1, MOD2) mit jeweils einem Taktgeber (GEN1, GEN2), in dem folgende Verfahrensschritte in nachstehender Reihenfolge ausgeführt werden:
- das erste Modul (MOD1) überträgt ein erstes, von seinem Taktgeber (GEN1) erzeugte Taktsignal (TS1) an das zumindest eine zweite Modul (MOD2),
- das zumindest eine zweite Modul (MOD2) synchronisiert seinen Taktgeber (GEN2) auf das erste Taktsignal (TS1),
- das zumindest eine zweite Modul (MOD2) überträgt ein zweites, von dem auf das erste Taktsignal (TS1) synchronisierten Taktgebe (GEN2) generiertes Taktsignal (TS2) an das erste Modul (MOD1),
- das erste Modul (MOD1) ermittelt einen Zeitdifferenzwert (DIF1) zwischen dem ersten Taktsignal (TS1) und dem zumindest einen zweiten Taktsignal (TS2), der im Wesentlichen durch die Übertragungszeit des ersten (TS1) und des zumindest einen zweiten Taktsignals (TS2) zwischen dem ersten Modul (MOD1) und dem zumindest einen zweiten Modul '(MOD2) bedingt ist,
- das erste Modul (MOD1) überträgt eine Information (COR1(DIF1)) über den Zeitdifferenzwert (DIF1) an das zumindest eine zweite Modul (MOD2) und
- das zumindest eine zweite Modul (MOD2) justiert einen Taktgeber (GEN2) anhand der Information (COR1(DIF1)) über den Zeitdifferenzwert (DIF1).

2. Verfahren nach Anspruch 1, **dadurch gekennzeichnet, dass** zur Justierung des Taktgebers (GEN2) des zumindest einen zweiten Moduls (MOD2) der Zeitdifferenzwert (DIF1) halbiert wird.

3. Verfahren nach Anspruch 1, **dadurch gekennzeichnet, dass** das zumindest eine zweite Modul (MOD2) einen zweiten Zeitdifferenzwert (DIF2) aus dem ersten und dem zweiten Taktsignal (TS2) ermittelt und dass das zumindest eine zweite Modul (MOD2) eine Information über den zweiten Zeitdifferenzwert (DIF2) an das erste Modul (MOD1) überträgt.

4. Verfahren nach Anspruch 1, **dadurch gekennzeichnet, dass** das erste Modul (MOD1) das erste, von seinem Taktgeber (GEN1) erzeugte Taktsignal (TS1) an das zumindest eine zweite Modul (MOD2) zu vorbestimmten Zeitpunkten, insbesondere zyklisch, überträgt.

5. Verfahren nach Anspruch 1, **dadurch gekennzeichnet, dass** das erste Modul (MOD1) das erste, von seinem Taktgeber (GEN1) erzeugte Taktsignal (TS1) an das zumindest eine zweite Modul (MOD2) in vorbestimmten Zeitabständen erneut überträgt, dass das zumindest eine zweite Modul (MOD2) jeweils einen zweiten Zeitdifferenzwert (DIF2) aus dem ersten und dem zweiten Taktsignal (TS2) ermittelt und dass das zumindest eine zweite Modul (MOD2) den jeweiligen zweiten Zeitdifferenzwert (DIF2) an das erste Modul (MOD1) überträgt und/oder bei Abweichen des jeweiligen zweiten Zeitdifferenzwertes (DIF2) von einem vorbestimmten Wert (DIF1) seinen Taktgeber (GEN2) anhand des jeweiligen zweiten Zeitdifferenzwertes (DIF2) justiert.

6. Verfahren nach Anspruch 1, **dadurch gekennzeichnet, dass** das zumindest eine zweite Modul (MOD2) das zweite, von seinem Taktgeber (GEN2) erzeugte Taktsignal (TS2) an das erste Modul (MOD1) in vorbestimmten Zeitabständen erneut überträgt, dass das erste Modul (MOD1) jeweils den Zeitdifferenzwert (DIF1) zwischen dem ersten Taktsignal (TS1) und dem jeweils empfangenen zweiten Taktsignal (TS2) ermittelt, dass das erste Modul (MOD1) bei Abweichen des jeweiligen Zeitdifferenzwertes (DIF1) von einem vorbestimmten Wert jeweils eine Information (COR1(DIF1)) über den jeweiligen Zeitdifferenzwert (DIF1) an das zumindest eine zweite Modul (MOD2) überträgt und dass das zumindest eine zweite Modul (MOD2) seinen Taktgeber (GEN2) anhand der Information über den jeweiligen Zeitdifferenzwert (DIF1) justiert.

7. Modul (MOD1) mit einem ersten Taktgeber (GEN1) zur Synchronisierung mit zumindest einem zweiten Modul (MOD2) mit einem zweiten Taktgeber (GEN2), das Sendemittel (SND11, SND12) zum Senden eines ersten, von dem ersten Taktgeber (GEN1) erzeugten Taktsignals (TS1) an das zumindest eine zweite Modul (MOD2) aufweist, das Empfangsmittel (RCV11, RCV12) zum anschliessenden Empfangen zumindest eines zweiten, von dem jeweiligen zweiten, auf das erste Taktsignal (TS1) synchronisierten Taktgeber (GEN2) generierten und von dem zumindest einen zweiten Modul (MOD2) gesendeten Taktsignals (TS2) aufweist, das Erzeugungsmittel (CP1) zum anschliessenden Bilden eines Zeitdifferenzwertes (DIF1) zwischen dem ersten Taktsignal (TS1) und dem zumindest einen zweiten Taktsignal (TS2) aufweist, der im Wesentlichen durch die Übertragungszeit des ersten (TS1) und des zumindest einen zweiten Taktsignals (TS2) zwischen dem Modul (MOD1) und dem zumindest einen zweiten Modul (MOD2) bedingt ist, und in dem die Sendemittel (SND11, SND12) zum anschliessenden Senden einer Information (COR1(DIF1)) über den Zeitdifferenzwert (DIF1) an das zumindest eine zweite Modul (MOD2) ausgestaltet sind.

8. Modul (MOD2) mit einem Taktgeber (GEN2) zur Synchronisierung mit zumindest einem zweiten Modul (MOD1), das Empfangsmittel (RCV21, RCV22) zum Empfangen eines ersten, von dem zweiten Modul gesendeten Taktsignals (TS1) aufweist, das Synchronisiermittel (GEN2) zum anschliessenden Synchronisieren seines Taktgebers (GEN2) anhand des ersten Taktsignals (TS1) aufweist, das Sendemittel (SND21, SND22) zum anschliessenden Senden eines zweiten, auf das erste Taktsignal (TS1) synchronisierten Taktsignals (TS2) an das zweite Modul (MOD1) aufweist, in dem die Empfangsmittel (RCV21, RCV22) zum anschliessenden Empfangen einer von dem zweiten Modul gesendeten Information (COR1(DIF1)) über einen aus dem ersten Taktsignal (TS1) und dem zweiten Taktsignal (TS2) gebildeten Zeitdifferenzwert (DIF1) ausgestaltet sind, der im Wesentlichen durch die Übertragungszeit des ersten (TS1) und des zumindest einen zweiten Taktsignals (TS2) zwischen dem modul (MOD2) und dem zumindest einen zweiten Modul (MOD1) bedingt ist, und in dem die Synchronisiermittel (GEN2) zum anschliessenden Justieren des Taktgebers (GEN2) anhand der Information über den Zeitdifferenzwert (DIF1) ausgestaltet sind.

9. Master-Programm-Modul für ein erstes Modul (MOD1) mit einem ersten Taktgeber (GEN1) zur Synchronisierung mit zumindest einem zweiten Modul (MOD2) mit einem zweiten Taktgeber (GEN2), wobei das Master-Programm-Modul Programmcode enthält, der durch ein Steuermittel des ersten Moduls (MOD1) ausgeführt werden kann, und Sendemittel zum Senden eines ersten, von dem ersten Taktgeber (GEN1) erzeugten Taktsignals (TS1) an das zumindest eine zweite Modul (MOD2) aufweist, wobei das Master-Programm-Modul Empfangsmittel zum anschliessenden Empfangen zumindest eines zweiten, von dem jeweiligen zweiten, auf das erste Taktsignal (TS1) synchronisierten Taktgeber (GEN2) generierten und von dem zumindest einen zweiten Modul (MOD2) gesendeten Taktsignals aufweist, wobei das Master-Programm-Modul Erzeugungsmittel zum anschliessenden Bilden eines Zeitdifferenzwertes (DIF1) zwischen ersten Taktsignal (TS1) und dem zumindest einen zweiten Taktsignal (TS2) aufweist, der im Wesentlichen durch die Übertragungszeit des ersten (TS1) und des zumindest einen zweiten Taktsignals (TS2) zwischen dem ersten (MOD1) und dem zumindest einen zweiten Modul (MOD2) bedingt ist, und wobei die Sendemittel zum anschliessenden Senden einer Information über den Zeitdifferenzwert (DIF1) an das zumindest eine zweite Modul (MOD2) ausgestaltet sind.

10. Slave-Programm-Modul für ein erstes Modul (MOD2) mit einem Taktgeber (CP2) zur Synchronisierung mit zumindest einem zweiter Modul (MOD1) wobei das Slave-Programm-Modul Programmcode enthält, der durch ein Steuermittel (CP2) des ersten Moduls (MOD2) ausgeführt werden kann, und wobei das Slave-Programm-Modul Empfangsmittel zum Empfangen eines ersten, von dem zweiten Modul (MOD1) gesendeten Taktsignals aufweist, und wobei das Slave-Programm-Modul Synchronisiermittel zum anschliessenden Synchronisieren des Taktgebers (CP2) anhand des ersten Taktsignals (TS1) aufweist, wobei das Slave-Programm-Modul Sendemittel zum anschliessenden Senden eines zweiten, auf das erste Taktsignal (TS1) synchronisierten Taktsignals (TS2) an das zweite Modul (MOD1) aufweist, wobei die Empfangsmittel zum anschliessenden Empfangen einer von dem zweiten Modul (MOD1) gesendeten Information über einen aus dem ersten Taktsignal (TS1) und dem zweiten Taktsignal (TS2) gebildeten Zeitdifferenzwert (DIF1) ausgestaltet sind, der im Wesentlichen durch die Übertragungszeit des ersten (TS1) und des zumindest einen zweiten Taktsignals (TS2) zwischen dem ersten Modul (MOD2) und dem zumindest einen zweiten Modul (MOD1) bedingt ist, und wobei die Synchronisiermittel zum anschliessenden Justieren des Taktgebers (CP2) anhand der Information über den Zeitdifferenzwert (DIF1) ausgestaltet sind.

11. Vorrichtung, insbesondere Telekommunikationsvorrichtung, enthaltend zumindest ein erstes und zumindest ein zweites Modul (MOD1, MOD2) mit jeweils einem Taktgeber (GEN1, GEN2), **dadurch gekennzeichnet, dass** das zumindest eine erste Modul (MOD1) als ein Modul nach Anspruch 7 ausgebildet ist und dass das zumindest eine zweite Modul (MOD2) als ein Modul nach Anspruch 8 ausgebildet ist.

12. Speichermittel, insbesondere computerlesbar Diskette, auf der ein Master-Programm-Modul nach Anspruch 9 und/oder ein Slave-Programm-Modul nach Anspruch 10 gespeichert sind.

## Claims

1. Procedure for synchronizing a first and at least one second module (MOD1, MOD2), each comprising a clock-pulse generator (GEN1, GEN2), in which the following procedure steps are executed in the following sequence:
- the first module (MOD1) transmits a first clock signal (TS1), generated by its clock-pulse generator (GEN1), to the at least one second module (MOD2),
- the at least one second module (MOD2) synchronizes its clock-pulse generator (GEN2) to the first clock signal (TS1),
- the at least one second module (MOD2) transmits a second clock signal (TS2), generated by the clock-pulse generator (GEN2) synchronized to the first clock signal (TS1), to the first module (MOD1),
- the first module (MOD1) ascertains a time difference value (DIF1) between the first clock signal (TS1) and the at least one second clock signal (TS2), which time difference is due, essentially, to the transmission time of the first (TS1) and of the at least one second clock signal (TS2) between the first module (MOD1) and the at least one second module (MOD2)
- the first module (MOD1) transmits a message (COR1(DIF1)) about the time difference value (DIF1) to the at least one second module (MOD2), and
- the at least one second module (MOD2) adjusts its clock-pulse generator (GEN2) on the basis of the message (COR1(DIF1)) about the time difference value (DIF1).

2. Procedure according to Claim 1, **characterized in that** the time difference value (DIF1) is halved for the purpose of adjusting the clock-pulse generator (GEN2) of the at least one second module (MOD2).

3. Procedure according to Claim 1, **characterized in that** the at least one second module (MOD2) ascertains a second time difference value (DIF2) from the first and the second clock signal (TS2), and the at least one second module (MOD2) transmits a message about the second time difference value (DIF2) to the first module (MOD1).

4. Procedure according to Claim 1, **characterized in that** the first module (MOD1) transmits the first clock signal (TS1), generated by its clock-pulse generator (GEN1), to the at least one second module (MOD2) at predefined instants, in particular, cyclically.

5. Procedure according to Claim 1, **characterized in that** the first module (MOD1) transmits the first clock signal (TS1), generated by its clock-pulse generator (GEN1), to the at least one second module (MOD2) over again at predefined intervals of time, the at least one second module (MOD2) respectively ascertains a second time difference value (DIF2) from the first and the second clock signal (TS2), and the at least one second module (MOD2) transmits the respective second time difference value (DIF2) to the first module (MOD1) and/or, if the respective second time difference value (DIF2) deviates from a predefined value (DIF1), adjusts its clock-pulse generator (GEN2) on the basis of the respective second time difference value (DIF2).

6. Procedure according to Claim 1, **characterized in that** the at least one second module (MOD2) transmits the second clock signal (TS2), generated by its clock-pulse generator (GEN2), to the first module (MOD1) over again at predefined intervals of time, the first module (MOD1) respectively ascertains the time difference value (DIF1) between the first clock signal (TS1) and the respectively received second clock signal (TS2), the first module (MOD1), if the respective time difference value (DIF1) deviates from a predefined value, respectively transmits a message (COR1(DIF1)) about the respective time difference value (DIF1) to the at least one second module (MOD2), and the at least one second module (MOD2) adjusts its clock-pulse generator (GEN2) on the basis of the message about the respective time difference value (DIF1).

7. Module (MOD1) comprising a first clock-pulse generator (GEN1) for synchronization with at least one second module (MOD2) comprising a second clock-pulse generator (GEN2), which module (MOD1) has transmitting means (SND11, SND12) for transmitting a first clock signal (TS1), generated by the first clock-pulse generator (GEN1), to the at least one second module (MOD2), which module (MOD1) has receiving means (RCV11, RCV12) for subsequently receiving at least one second clock signal (TS2), generated by the respective second clock-pulse generator (GEN2) synchronized to the first clock signal (TS1) and transmitted by the at least one second module (MOD2), which module (MOD1) has generating means (CP1) for producing a time difference value (DIF1) between the first clock signal (TS1) and the at last one second clock signal (TS2), which time difference value (DIF1) is due, essentially, to the transmission time of the first (TS1) and of the at least one second clock signal (TS2) between the module (MOD1) and the at least one second module (MOD2), and in which module (MOD1) the transmitting means (SND11, SND12) are designed for subsequently transmitting a message (COR1(DIF1) about the time difference value (DIF1) to the at least one second module (MOD2).

8. Module (MOD2) comprising a clock-pulse generator (GEN2) for synchronization with at least one second module (MOD1), which module (MOD2) has receiving means (RCV21, RCV22) for receiving a first clock signal (TS1) transmitted by the second module, which module (MOD2) has synchronization means (GEN2) for subsequently synchronizing its clock-pulse generator (GEN2) on the basis of the first clock signal (TS1), which module (MOD2) has transmitting means (SND21, SND22) for subsequently transmitting a second clock signal (TS2), synchronized to the first clock signal (TS10, to the second module (MOD1), in which module (MOD2) the receiving means (RCV21, RCV22) are designed for subsequently receiving a message (COR1(DIF1)), transmitted by the second module, about a time difference value (DIF1) produced from the first clock signal (TS1) and from the second clock signal (TS2), which time difference value (DIF1) is due, essentially, to the transmission time of the first (TS1) and of the at least one second clock signal (TS2) between the module (MOD2) at the at least one second module (MOD1), and in which module (MOD2) the synchronization means (GEN2) are designed for subsequently adjusting the clock-pulse generator (GEN2) on the basis of the message about the time difference value (DIF1).

9. Master program module for a first module (MOD1), comprising a first clock-pulse generator (GEN1), for synchronization with at least one second module (MOD2), comprising a second clock-pulse generator GEN2), wherein the master program module contains program code which can be executed by a control means of the first module (MOD1), and wherein the master program module has transmitting means for transmitting a first clock signal (TS1), generated by the first clock-pulse generator (GEN1), to the at least one second module (MOD2), receiving means for subsequently receiving at least one second clock signal, generated by the respective second clock-pulse generator (GEN2) synchronizes to the first clock signal (TS1) and transmitted by the at least one second module (MOD2), generating means for subsequently producing a time difference value (DIF1) between the first clock signal (TS1) and the at least one second clock signal (TS2), which time difference value (DIF1) is due, essentially, to the transmission time of the first (TS1) and of the at least one second clock signal (TS2) between the first (MOD1) and the at least one second module (MOD2), and wherein the transmitting means are designed for subsequently transmitting a message about the time difference value (DIF1) to the at least one second module (MOD2).

10. Slave program module for a first module (MOD2) comprising a clock-pulse generator (CP2) for synchronization with at least one second module (MOD1), wherein the slave program module contains program code which can be executed by a control means (CP2) of the first module (MOD2), and wherein the slave program module has receiving means for subsequently receiving a first clock signal transmitted by the second module (MOD1), and wherein the slave program module has synchronization means for subsequently synchronizing the clock-pulse generator (CP2) on the basis of the first clock signal (TS1), wherein the slave program module has transmitting means for subsequently transmitting a second clock signal (TS2), synchronized to the first clock signal (TS1), to the second module (MOD1), wherein the receiving means are designed for subsequently receiving a message, transmitted by the second module (MOD1), about a time difference value (DIF1) produced from the first clock signal (TS1) and from the second clock signal (TS2), which time difference value (DIF1) is due, essentially, to the transmission time of the first (TS1) and of the at least one second clock signal (TS2) between the first module (MOD2) and the at least one second module (MOD1), and wherein the synchronization means are designed for subsequently adjusting the clock-pulse generator (CP2) on the basis of the message about the time difference value (DIF1).

11. Device, particularly telecommunications device, comprising at least one first and at least one second module (MOD1, MOD2) which respectively comprise a clock-pulse generator (GEN1, GEN2), **characterized in that** the at least one first module (MOD1) is designed as a module according to Claim 7 and the at least one second module (MOD2) is designed as a module according to Claim 8.

12. Storage means, particularly computer-readable diskette, on which a master program module according to Claim 9 and/or a slave program module according to Claim 10 are stored.

## Revendications

1. Procédé de synchronisation d'un premier et d'au moins un deuxième module (MOD1, MOD2) comprenant respectivement un générateur d'horloge (GEN1, GEN2) dans lequel les étapes suivantes sont exécutées dans l'ordre indiqué ci-après :
- le premier module (MOD1) transmet un premier signal d'horloge (TS1) généré par son générateur d'horloge (GEN1) au l'au moins un deuxième module (MOD2),
- l'au moins un deuxième module (MOD2) synchronise son générateur d'horloge (GEN2) sur le premier signal d'horloge (TS1),
- l'au moins un deuxième module (MOD2) transmet au premier module (MOD1) un deuxième signal d'horloge (TS2) généré par le générateur d'horloge (GEN2) synchronisé sur le premier signal d'horloge (TS1),
- le premier module (MOD1) détermine une première valeur de différence de temps (DIF1) entre le premier signal d'horloge (TS1) et l'au moins un deuxième signal d'horloge (TS2), lequel est essentiellement lié au temps de transmission du premier (TS1) et de l'au moins un deuxième signal d'horloge (TS2) entre le premier module (MOD1) et l'au moins un deuxième module (MOD2),
- le premier module (MOD1) transmet une information (COR1(DIF1)) sur la valeur de la différence de temps (DIF1) à l'au moins un deuxième module (MOD2) et
- l'au moins un deuxième module (MOD2) ajuste son générateur d'horloge (GEN2) au moyen de l'information (COR1(DIF1)) sur la valeur de la différence de temps (DIF1).

2. Procédé selon la revendication 1, **caractérisé en ce que** la valeur de la différence de temps (DIF1) est divisée par deux pour ajuster le générateur d'horloge (GEN2) de l'au moins un deuxième module (MOD2).

3. Procédé selon la revendication 1, **caractérisé en ce que** l'au moins un deuxième module (MOD2) détermine une deuxième valeur de la différence de temps (DIF2) à partir du premier et du deuxième signal d'horloge (TS2) et que l'au moins un deuxième module (MOD2) transmet une information sur la deuxième valeur de la différence de temps (DIF2) au premier module (MOD1).

4. Procédé selon la revendication 1, **caractérisé en ce que** le premier module (MOD1) transmet le premier signal d'horloge (TS1) généré par son générateur d'horloge (GEN1) à l'au moins un deuxième module (MOD2) à des instants prédéfinis, notamment de manière cyclique.

5. Procédé selon la revendication 1, **caractérisé en ce que** le premier module (MOD1) transmet de nouveau le premier signal d'horloge (TS1) généré par son générateur d'horloge (GEN1) à l'au moins un deuxième module (MOD2) à des intervalles de temps prédéfinis, que l'au moins un deuxième module (MOD2) détermine à chaque fois une deuxième valeur de la différence de temps (DIF2) à partir du premier et du deuxième signal d'horloge (TS2) et que l'au moins un deuxième module (MOD2) transmet la deuxième valeur de la différence de temps (DIF2) correspondante au premier module (MOD1) et/ou, en cas de différence entre la deuxième valeur de la différence de temps (DIF2) correspondante et une valeur prédéfinie (DIF1), ajuste son générateur d'horloge (GEN2) au moyen de la deuxième valeur de la différence de temps (DIF2) correspondante.

6. Procédé selon la revendication 1, **caractérisé en ce que** l'au moins un deuxième module (MOD2) transmet de nouveau le deuxième signal d'horloge (TS2) généré par son générateur d'horloge (GEN2) au premier module (MOD1) à des intervalles de temps prédéfinis, que le premier module (MOD1) détermine à chaque fois la valeur de la différence de temps (DIF1) entre le premier signal d'horloge (TS1) et le deuxième signal d'horloge (TS2) à chaque fois reçu, que le premier module (MOD1), en cas de différence entre la valeur de la différence de temps (DIF1) correspondante et une valeur prédéfinie, transmet à chaque fois une information (COR1(DIF1)) sur la valeur de la différence de temps (DIF1) correspondante à l'au moins un deuxième module (MOD2) et que l'au moins un deuxième module (MOD2) ajuste son générateur d'horloge (GEN2) au moyen de l'information sur la valeur de la différence de temps (DIF1) correspondante.

7. Module (MOD1) comprenant un premier générateur d'horloge (GEN1) destiné à la synchronisation avec au moins un deuxième module (MOD2) comprenant un deuxième générateur d'horloge (GEN2), lequel présente des moyens d'émission (SND11, SND12) pour émettre un premier signal d'horloge (TS1) généré par le premier générateur d'horloge (GEN1) à l'au moins un deuxième module (MOD2), lequel présente des moyens de réception (RCV 11, RCV12) pour recevoir exclusivement au moins un deuxième signal d'horloge (TS2) généré par le deuxième générateur d'horloge (GEN2) correspondant synchronisé sur le premier signal d'horloge (TS1) et envoyé par l'au moins un deuxième module (MOD2), lequel présente des moyens de production (CP1) pour calculer exclusivement une valeur de la différence de temps (DIF1) entre le premier signal d'horloge (TS1) et l'au moins un deuxième signal d'horloge (TS2), laquelle est essentiellement liée au temps de transmission du premier (TS1) et de l'au moins un deuxième signal d'horloge (TS2) entre le module (MOD1) et l'au moins un deuxième module (MOD2), et dans lequel les moyens d'émission (SND11, SND12) sont configurés pour émettre exclusivement une information (COR1(DIF1)) sur la valeur de la différence de temps (DIF1) à l'au moins un deuxième module (MOD2).

8. Module (MOD2) comprenant un générateur d'horloge (GEN2) destiné à la synchronisation avec au moins un deuxième module (MOD1) qui présente des moyens de réception (RCV21, RCV22) pour recevoir un premier signal d'horloge (TS1) généré par le deuxième module, lequel présente des moyens de synchronisation (GEN2) exclusivement destinés à synchroniser son générateur d'horloge (GEN2) au moyen du premier signal d'horloge (TS1), lequel présente des moyens d'émission (SND21, SND22) pour émettre exclusivement un deuxième signal d'horloge (TS2), synchronisé sur le premier signal d'horloge (TS1), au deuxième module (MOD1), dans lequel les moyens de réception (RCV21, RCV22) sont configurés pour recevoir exclusivement une information (COR1(DIF1)) sur une valeur de la différence de temps (DIF1) envoyée par le deuxième module (MOD1) et calculée à partir du premier signal d'horloge (TS1) et du deuxième signal d'horloge (TS2), laquelle est essentiellement liée au temps de transmission du premier (TS1) et de l'au moins un deuxième signal d'horloge (TS2) entre le module (MOD1) et l'au moins un deuxième module (MOD2), et dans lequel les moyens de synchronisation (GEN2) sont configurés exclusivement pour ajuster le générateur d'horloge (GEDN2) au moyen de l'information sur la valeur de la différence de temps (DIF1).

9. Module de programme maître pour un premier module (MOD1) comprenant un premier générateur d'horloge (GEN1) destiné à la synchronisation avec au moins un deuxième module (MOD2) comprenant un deuxième générateur d'horloge (GEN2), le module de programme maître contenant un code de programme qui peut être exécuté par un moyen de commande du premier module (MOD1), et le module de programme maître présentant des moyens d'émission pour émettre un premier signal d'horloge (TS1) généré par le premier générateur d'horloge (GEN1) à l'au moins un deuxième module (MOD2), le module de programme maître présentant des moyens de réception pour recevoir exclusivement au moins un deuxième signal d'horloge généré par le deuxième générateur d'horloge (GEN2) correspondant synchronisé sur le premier signal d'horloge (TS1) et envoyé par l'au moins un deuxième module (MOD2), le module de programme maître présentant des moyens de production pour calculer exclusivement une valeur de la différence de temps (DIF1) entre le premier signal d'horloge (TS1) et l'au moins un deuxième signal d'horloge (TS2), laquelle est essentiellement liée au temps de transmission du premier (TS 1) et de l'au moins un deuxième signal d'horloge (TS2) entre le module (MOD1) et l'au moins un deuxième module (MOD2), et les moyens d'émission étant configurés pour émettre exclusivement une information sur la valeur de la différence de temps (DIF1) à l'au moins un deuxième module (MOD2).

10. Module de programme esclave pour un premier module (MOD2) comprenant un générateur d'horloge (CP2) destiné à la synchronisation avec au moins un deuxième module (MOD1), le module de programme esclave contenant un code de programme qui peut être exécuté par un moyen de commande (CP2) du premier module (MOD2), et le module de programme esclave présentant des moyens de réception pour recevoir un premier signal d'horloge envoyé par le deuxième module (MOD1), et le module de programme esclave présentant des moyens de synchronisation exclusivement destinés à synchroniser le générateur d'horloge (CP2) au moyen du premier signal d'horloge (TS1), le module de programme esclave présentant des moyens d'émission pour émettre exclusivement un deuxième signal d'horloge (TS2), synchronisé sur le premier signal d'horloge (TS1) au deuxième module (MOD1), les moyens de réception étant configurés pour recevoir exclusivement une information sur une valeur de la différence de temps (DIF1) envoyée par le deuxième module (MOD1) et calculée à partir du premier signal d'horloge (TS1) et du deuxième signal d'horloge (TS2), laquelle est essentiellement liée au temps de transmission du premier (TS1) et de l'au moins un deuxième signal d'horloge (TS2) entre le premier module (MOD1) et l'au moins un deuxième module (MOD2), et les moyens de synchronisation étant configurés exclusivement pour ajuster le générateur d'horloge (CP2) au moyen de l'information sur la valeur de la différence de temps (DIF1).

11. Dispositif, notamment dispositif de télécommunication, comprenant au moins un premier et au moins un deuxième module (MOD1, MOD2) comprenant respectivement un générateur d'horloge (GEN1, GEN2), **caractérisé en ce que** l'au moins un premier module (MOD1) est réalisé sous la forme d'un module selon la revendication 7 et que l'au moins un deuxième module (MOD2) est réalisé sous la forme d'un module selon la revendication 8.

12. Moyen d'enregistrement, notamment disquette lisible par un ordinateur, sur lequel sont enregistrés un module de programme maître selon la revendication 9 et/ou un module de programme esclave selon la revendication 10.
